# EUROPÄISCHE PATENTSCHRIFT

(11) **EP 2 053 363 B1**
(45) Veröffentlichungstag und Bekanntmachung des Hinweises auf die Patenterteilung: **01.10.2014**
(21) Anmeldenummer: 08105626.9
(22) Anmeldetag: 21.10.2008
(51) Int. Cl.: G01D 5/245

(54) **Vorrichtung zum Ermitteln von Umdrehungen einer Welle**
Device for calculating the revolutions of a shaft
Dispositif destiné à l'établissement de retournements d'un arbre

(30) Priorität: 24.10.2007 DE 102007050898
(43) Veröffentlichungstag der Anmeldung: 29.04.2009
(73) Patentinhaber: Continental Automotive GmbH, 30165 Hannover (DE)
(72) Erfinder: Zappa, Olaf, 93049, Regensburg (DE); Hannappel, Joachim, 65620, Waldbrunn (DE); Heyer, Christian, 68519, Viernheim (DE); Hirschmann, Andreas, 65830, Kriftel (DE)

(56) Entgegenhaltungen:
- EP-A1- 2 050 658
- DE-A1- 4 229 610

## Beschreibung

In vielen Anwendungsbereichen spielt die Ermittlung von Umdrehungen einer Welle eine große Rolle. Dabei kann die Welle beispielsweise als Lenkstange in einem Kraftfahrzeug oder als Rotor einer elektrischen Maschine ausgebildet sein. Mittels der erfassten Umdrehungen lässt sich beispielsweise die absolute Position der jeweiligen Welle, d. h. deren absoluter Drehwinkel bezogen auf einen vorgegebenen Bezugspunkt ermitteln. Dabei können die Anforderungen an die Ermittlung von Umdrehungen je Anwendungsfall durchaus unterschiedlich sein. So sind beispielsweise volle Umdrehungen oder nur halbe Umdrehungen der Welle zu ermitteln.
Die Offenlegungsschrift DE 4229610 offenbart einen Multiturn Drehgeber mit Absolutwert-Positionserfassung mit zwei Sensoren, einer ersten und zweiten Zähleinheit sowie einer Schaltung zur Datenselektion, die dazu ausgebildet ist den Zähler mit dem jeweils richtigen Datenbestand auszuwählen.

Die Aufgabe, die der Erfindung zugrunde liegt, ist es, eine Vorrichtung zum Ermitteln von Umdrehungen einer Welle zu schaffen, die kostengünstig und möglichst genau ist.

Die Aufgabe wird gelöst durch die Merkmale des unabhängigen Patentanspruchs. Vorteilhafte Ausgestaltungen der Erfindung sind in den Unteransprüchen gekennzeichnet.

Die Erfindung zeichnet sich aus durch eine Vorrichtung zum Ermitteln von Umdrehungen einer Welle, wobei die Vorrichtung eine Sensoreinheit aufweist, die dazu ausgebildet ist, ein Sensorsignal zu erfassen, das repräsentativ ist für einen Drehwinkel der Welle bezogen auf einen vorgegebenen Bezugspunkt. Ferner weist die Vorrichtung eine erste und eine zweite Zähleinheit auf, die dazu ausgebildet sind, unter Auswertung des Sensorsignals jeweils entweder ein Inkrement- oder ein Dekrementsignal nach einem jeweils vorgegebenen Ablaufwinkel, der bezogen ist auf einen vorgegebenen Bezugswinkel oder auch eines dessen Vielfachen bis zu einem maximalen Vielfachen, zu erzeugen, wobei der Bezugswinkel und auch dessen Vielfache auf den Bezugspunkt bezogen sind und der Ablaufwinkel und das maximale Vielfache so vorgegeben sind, dass ein Produkt des Wertes des maximalen Vielfachen mit dem Bezugwinkel gleich 360° ergibt und der Ablaufwinkel der ersten und zweiten Zähleinheit verschieden vorgegeben sind. Des Weiteren umfasst die Vorrichtung eine Entscheidungseinheit, die dazu ausgebildet ist, die zweite Zähleinheit auszuwählen, wenn das Sensorsignal einen Drehwinkel innerhalb eines vorgegebenen Zuordnungswinkelbereichs um den jeweiligen ersten Ablaufwinkel repräsentiert, ansonsten die erste Zähleinheit auszuwählen, wobei der vorgegebene Zuordnungswinkelbereich außerhalb des jeweiligen zweiten Ablaufwinkels liegt.

Durch die Verwendung der ersten und zweiten Zähleinheit ist eine Redundanz gegeben, die eine besonders sichere Ermittlung von Umdrehungen der Welle gewährleistet. Des Weiteren ist durch die Redundanz und die verschiedenen Ablaufwinkel der Zähleinheiten besonders vorteilhaft eine winkelversetzte Erzeugung der jeweiligen Inkrementsignale oder Dekrementsignale möglich, wodurch auch ein Zählen der Umdrehungen der Welle in der ersten Zähleinheit winkelversetzt ist zu dem Zählen in der zweiten Zähleinheit. Somit ergibt sich besonders vorteilhaft ein Zuordnungswinkelbereich innerhalb dessen die zweite Zähleinheit die Umdrehungen der Welle sicher nicht zählt. Dadurch kann innerhalb des Zuordnungswinkelbereiches die zweite Zähleinheit ausgewählt werden und der Zähler der zweiten Zähleinheit besonders sicher ausgelesen werden, ohne das eine Inkrementierung oder Dekrementierung erfolgt auch unter Berücksichtigung von Störeinflüssen.

Der Bezugswinkel kann derart ausgebildet sein, dass er eine volle Umdrehung der Welle umfasst, so dass innerhalb des Bezugswinkels der erste und der zweite Ablaufwinkel ausgebildet sind. Ist der Drehwinkel der Welle gleich dem ersten oder zweiten Ablaufwinkel, wird das jeweilige Inkrementsignal oder Dekrementsignal innerhalb der ersten oder zweiten Zähleinheit erzeugt. Somit werden besonders vorteilhaft volle Umdrehungen der Welle mittels der ersten und zweiten Zähleinheit gezählt. Der Bezugswinkel kann aber auch derart vorgegeben sein, dass ein maximales Vielzahles der Bezugswinkel die volle Umdrehung der Welle repräsentiert. Somit werden Umdrehungsbereiche, die dem Bereich des Bezugswinkels zugeordnet sind, mittels der ersten und zweiten Zähleinheit gezählt.

Gemäß einer vorteilhaften Ausgestaltung umfasst die erste und die zweite Zähleinheit jeweils eine Analogeinheit, die abhängig vom Sensorsignal ausgangsseitig ein Zustandssignal erzeugt und zwar derart, dass einer vorgegebenen Drehwinkeländerung ein vorgegebener Zustand zugeordnet wird, wobei mittels des Zustandssignals entweder das Inkrementsignal oder das Dekrementsignal erzeugt wird. Durch die Verwendung der Analogeinheiten kann besonders eindeutig der jeweiligen Drehwinkeländerung der Welle ein jeweils vorgegebener Zustand zugeordnet werden. Einem vorgegebenen Winkelbereich des Drehwinkels kann somit ein Zustand zugeordnet werden, wodurch im Weiteren nicht der gesamte Winkelbereich zwischen 0° und 360° überwacht werden muss, sondern nur der jeweilige Zustand.

Gemäß einer weiteren vorteilhaften Ausgestaltung umfasst die erste und zweite Zähleinheit jeweils einen Zustandsautomaten, der dazu ausgebildet ist, abhängig von dem jeweiligen Zustandssignal und dem von diesem vorgegebenen Zustand jeweils entweder ein Inkrementsignal oder ein Dekrementsignal zu erzeugen. Durch die Verwendung von Zustandsautomaten zur Erzeugung der jeweiligen Inkrementsignale und Dekrementsignale kann besonders genau der jeweilige Zähler entweder inkrementiert oder dekrementiert werden. Die durch das jeweilige Zustandssignal vorgegebenen Zustände können in dem jeweiligen Zustandsautomaten interpretiert werden. Dadurch kann bei einem eingangsseitig anliegenden vorgegebenen Zustand oder einem vorgegebenen Zustandswechsel das Inkrementsignal oder das Dekrementsignal ausgangsseitig vorgegeben werden, wodurch der jeweilige Zähler entweder inkrementiert oder dekrementiert wird.

Gemäß einer weiteren vorteilhaften Ausgestaltung umfasst die erste und die zweite Zähleinheit jeweils einen Zähler, der dazu ausgebildet ist, abhängig von dem Inkrementsignal oder dem Dekrementsignal seinen jeweiligen Zählerstand zu inkrementieren bzw. zu dekrementieren. Mittels der Zähler können die Umdrehungen der Welle besonders einfach und kostengünstig ermittelt werden.

Gemäß einer weiteren vorteilhaften Ausgestaltung ist die Vorrichtung dazu ausgebildet, abhängig von einer Drehrichtung der Welle den jeweiligen Zähler entweder zu inkrementieren oder zu dekrementieren und zwar derart, dass in einer ersten Drehrichtung inkrementiert wird und in einer zweiten, entgegengesetzten Drehrichtung dekrementiert wird. Somit repräsentiert der jeweilige Zählerstand der jeweiligen Zähleinheit besonders vorteilhaft die tatsächlichen Drehwinkeländerungen der Welle ohne eine zusätzliche Berechnung durchführen zu müssen und unter Berücksichtigung gegebenenfalls erfolgender Drehrichtungsänderungen der Welle.

Ausführungsbeispiele der Erfindung sind im Folgenden anhand der schematischen Zeichnungen näher erläutert. Es zeigen:
- Figur 1: eine schematische Darstellung einer Vorrichtung,
- Figur 2: eine schematische Darstellung einer Analogeinheit,
- Figur 3: eine tabellarische Darstellung zur Funktionsweise der Komponente der Erfassungseinheit,
- Figur 4: ein Zustandsdiagramm,
- Figur 5: eine zeitliche Darstellung von Sensorsignalen einer Sensoreinheit,
- Figur 6: eine schematische Darstellung einer Welle,
- Figur 7: eine weitere schematische Darstellung einer Welle,
- Figur 8: eine zeitliche Darstellung eines Inkrement- und Dekrementsignals.

Elemente gleicher Konstruktion oder Funktion sind figurenübergreifend mit den gleichen Bezugszeichen gekennzeichnet.

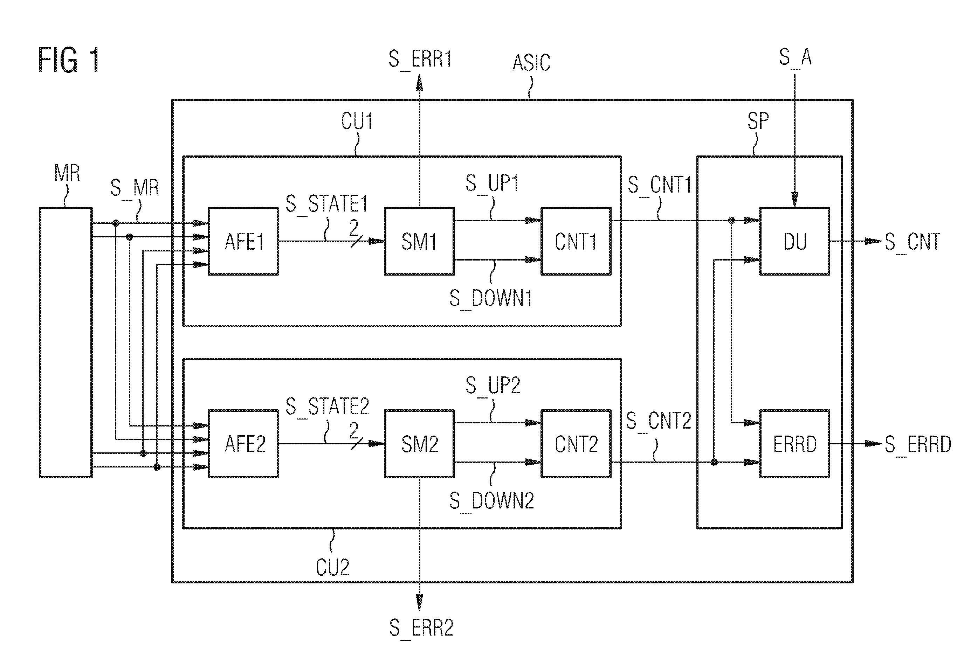

In Figur 1 ist eine Auswerteeinheit ASIC dargestellt, die als applikationsspezifisches integriertes Bauelement ausgebildet ist und für die Ermittlung von Umdrehungen der Welle W verwendet wird. Der Auswerteeinheit ASIC ist eingangsseitig ein Sensorsignal S_MR des Sensors MR zugeordnet. Das Sensorsignal S_MR ist repräsentativ für einen Drehwinkel der Welle W bezogen auf einen vorgegebenen Bezugspunkt BP. Die Auswerteeinheit ASIC und der Sensor MR können als Vorrichtung zum Ermitteln von Umdrehungen der Welle W angesehen werden.

Die Auswerteeinheit ASIC umfasst eine erste Zähleinheit CU1 und eine zweite Zähleinheit CU2, denen eingangsseitig das Sensorsignal S_MR zugeordnet ist.

Der Sensor MR zur Erfassung des Sensorsignals S_MR ist beispielsweise als magnetoresistiver Messsensor ausgebildet, der ein Sinus- und ein Kosinussignal als Sensorsignal S_MR an die Auswerteeinheit ASIC liefert. Aber auch andere dem Fachmann bekannte Sensoren sind verwendbar. Einem anliegenden Sensorsignalwert des Sinus- und Kosinussignals kann direkt ein Drehwinkel der Welle W bezogen auf den vorgegebenen Bezugspunkt zugeordnet werden. Dabei kann der Sensor MR derart ausgebildet sein, dass ein Drehwinkelbereich von 0° bis 360° bezogen auf den vorgegebenen Bezugspunkt BP zu einer vollen Umdrehung der Welle W korrespondiert. Grundsätzlich lassen sich aber auch andere Umdrehungsbereiche der Welle durch den vom Sensor vorgegebenen Winkelbereich repräsentieren, so z. B. halbe Umdrehungen der Welle. Zur Vereinfachung wird zunächst in den folgenden Ausführungsbeispielen eine volle Umdrehung der Welle durch den Winkelbereich von 0° bis 360° bezogen auf den vorgegebenen Bezugspunkt BP repräsentiert.

Des Weiteren ist der Sensor MR typischerweise derart ausgebildet, dass Mehrfachumdrehungen der Welle W mit dem Sensor MR selbst nicht erfasst werden können. Grundsätzlich sind auch mehrere Sensoren MR zur Erfassung der Position der Welle W denkbar, so z. B. kann jeweils ein Sensor MR jeweils einer Zähleinheit zugeordnet sein. Der Sensor MR kann in einer vorteilhaften Ausführung von der Auswerteeinheit ASIC angesteuert werden, so z. B. permanent oder getaktet. Dadurch kann der Sensor MR besonders stromsparend betrieben werden.

Die erste Zähleinheit CU1 umfasst eine erste Analogeinheit AFE1, einen ersten Zustandsautomaten SM1 und einen ersten Zähler CNT1. Der ersten Analogeinheit AFE1 ist das Sensorsignal S_MR eingangsseitig zugeordnet. Ausgangsseitig ist die erste Analogeinheit AFE1 dem ersten Zustandsautomaten SM1 mittels eines ersten Zustandssignals S_STATE1 zugeordnet. Die erste Analogeinheit AFE1 kann als Schnittstelle zwischen dem analogen Sensorsignal S_MR und dem digitalen ersten Zustandssignal S_STATE1 angesehen werden.

Dem ersten Zustandsautomaten SM1 ist eingangsseitig das erste Zustandssignal S_STATE1 zugeordnet. Abhängig von diesem erzeugt der erste Zustandsautomat SM1 ausgangsseitig ein erstes Inkrementsignal S_UP1 und ein erstes Dekrementsignal S_DOWN1, die beide dem ersten Zähler CNT1 eingangsseitig zugeordnet sind. Des Weiteren weist der erste Zustandsautomat SM1 ausgangsseitig ein erstes Zustandsfehlersignal S_ERR1 auf. Der erste Zähler CNT1 ist als Aufwärts- und Abwärtszähler ausgebildet und inkrementiert seinen aktuellen Zählerstand abhängig von dem ersten Inkrementsignal S_UP1 und dekrementiert seinen aktuellen Zählerstand abhängig von dem ersten Dekrementsignal S_DOWN1. Ausgangsseitig generiert der erste Zähler CNT1 ein erstes Zählersignal S_CNT1.

Die zweite Zähleinheit CU2 ist analog zu der ersten Zähleinheit CU1 ausgebildet, umfassend eine zweite Analogeinheit AFE2, einen zweiten Zustandsautomaten SM2, sowie einen zweiten Zähler CNT2.

Ferner umfasst die Auswerteeinheit ASIC einen Signalprozessor SP, dem eingangsseitig das erste Zählersignal S_CNT1 und das zweite Zählersignal S_CNT2, sowie ein Drehwinkelsignal S_A, das repräsentativ ist für den gerade gültigen Sensorwert des Sensors MR, zugeordnet ist. Der Signalprozessor SP umfasst neben einer Fehlererkennungseinheit ERRD eine Entscheidungseinheit DU. Der Entscheidungseinheit DU, sowie der Fehlererkennungseinheit ERRD ist eingangsseitig das erste und das zweite Zählersignal S_CNT1 und S_CNT2 zugeordnet. Des Weiteren ist der Entscheidungseinheit DU das Drehwinkelsignal S_A zugeordnet. Die Entscheidungseinheit DU erzeugt ausgangsseitig ein Winkelsignal S_CNT. Die Fehlererkennungseinheit ERRD erzeugt ausgangsseitig ein Fehlerstatussignal S_ERR.

Umfasst die Auswerteeinheit ASIC beispielsweise eine Kommunikationsschnittstelle, so kann mittels dieser dem jeweiligen Empfänger das Winkelsignal S_CNT der Entscheidungseinheit DU und/oder das Fehlerstatussignal S ERR der Fehlererkennungseinheit ERRD übermittelt werden.

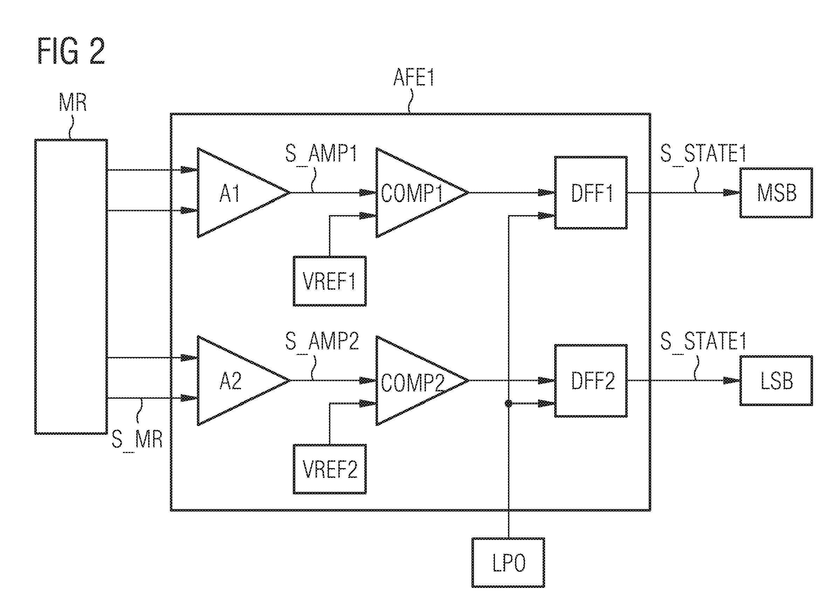

Figur 2 stellt die erste Analogeinheit AFE1 der ersten Zählereinheit CU1 der Erfassungseinheit ASIC dar. Die Analogeinheit AFE1 umfasst einen ersten und einen zweiten Verstärker A1 und A2, denen eingangsseitig das Sensorsignal S_MR zugeordnet ist. Das als Sinus- und Kosinussignal ausgebildete Sensorsignal S_MR kann Werte für einen Winkelbereich des Sensors MR von 0° bis 360° repräsentieren. Dem ersten Verstärker A1 ist das Sinussignal des Sensorsignals S_MR zugeordnet und dem zweiten Verstärker A2 ist das Kosinussignal des Sensorsignals S MR zugeordnet. Grundsätzlich kann aber auch das Kosinussignal dem ersten Verstärker A1 und das Sinussignal dem zweiten Verstärker A2 zugeordnet werden.

Der erste und zweite Verstärker A1 und A2 können beispielsweise als Operationsverstärker mit automatischer Nullpunkteinstellung ausgebildet sein. Aber auch andere dem Fachmann bekannte Ausbildungen sind verwendbar.

Die erste Analogeinheit AFE1 umfasst des Weiteren einen ersten und einen zweiten Komparator COMP1 und COMP2, denen eingangsseitig ein mittels des ersten und des zweiten Verstärkers A1 und A2 erzeugtes erstes und zweites Verstärkersignal S_AMP1 und S_AMP2 zugeordnet ist. Der erste Komparator COMP1 vergleicht das eingangsseitig anliegende erste Verstärkersignal S_AMP1 mit einem ersten eingangsseitig anliegenden Referenzsignal VREF1. Der zweite Komparator COMP2 vergleicht das eingangsseitig anliegende zweite Verstärkersignal S_AMP2 mit einem zweiten eingangsseitig anliegenden Referenzsignal VREF2.

Ferner umfasst die erste Analogeinheit AFE1 ein erstes und ein zweites Schaltelement DFF1 und DFF2, die typischerweise als D-Flipflops ausgebildet sind. Der Ausgang des ersten Komparators COMP1 ist dem ersten Schaltelement DFF1 eingangsseitig zugeordnet und der Ausgang des zweiten Komparators COMP2 ist dem zweiten Schaltelement DFF2 eingangsseitig zugeordnet. Des Weiteren ist dem ersten und zweiten Schaltelement DFF1 und DFF2 ein Taktsignal eines Low-Power-Oszillators LPO eingangsseitig zugeordnet, so z. B. mit einer Frequenz von 200 kHz. Grundsätzlich können dem Schaltelementen DFF1 und DFF2 auch jeweils ein eigener Low-Power-Oszillator LPO zugeordnet sein. Abhängig vom eingangsseitig anliegenden Komparatorausgang und dem Taktsignal wird mittels des ersten und zweiten Schaltelements DFF1 und DFF2 das erste Zustandssignal S_STATE1 erzeugt. Mittels des Taktsignals zur Ansteuerung des ersten und zweiten Schaltelements DFF1 und DFF2 können hochfrequente Zustandswechsel des ersten Zustandssignals S_STATE1, die aus Rauschanteile am Ausgang des entsprechenden Komparators COMP1 oder COMP2 resultieren können, besonders vorteilhaft unterdückt werden, so dass mindestens für die Dauer einer Periode des Taktsignals ein stabiler Zustand des ersten Zustandssignals S_STATE1 anliegt. Um eine besonders sichere und zuverlässige Drehwinkelerfassung zu gewährleisten, kann der Low-Power-Oszillator LPO durch eine separate Überwachungseinheit überwacht werden (nicht dargestellt), so dass beispielsweise bei einem fehlerhaften Betrieb des Low-Power-Oszillators LPO die ermittelten Drehwinkeländerungen als fehlerhaft und/oder als nichtvertrauenswürdig angezeigt werden.

Das erste Zustandssignal S_STATE1 umfasst ein MSB-Signal und ein LSB-Signal, die jeweils zwei Werte annehmen können, so z.B. eine logische 0 oder eine logische 1. Mittels des ersten Zustandssignals S_STATE1 wird somit ein zweistelliger Binärkode übermittelt. Ein zur Übermittlung des ersten Zustandssignals S_STATE1 verwendetes Übertragungsmittel ist typischerweise zweiadrig ausgebildet. Aber auch andere dem Fachmann bekannte Ausbildungen des Zustandssignals, sowie des Übertragungsmittels sind denkbar.

Die der zweiten Zähleinheit CU2 zugeordnete zweite Analogeinheit AFE2 ist analog zu der ersten Analogeinheit AFE1 ausgebildet und erzeugt idealerweise ein zum ersten Zustandssignal S_STATE1 identisches zweites Zustandssignal S_STATE2.

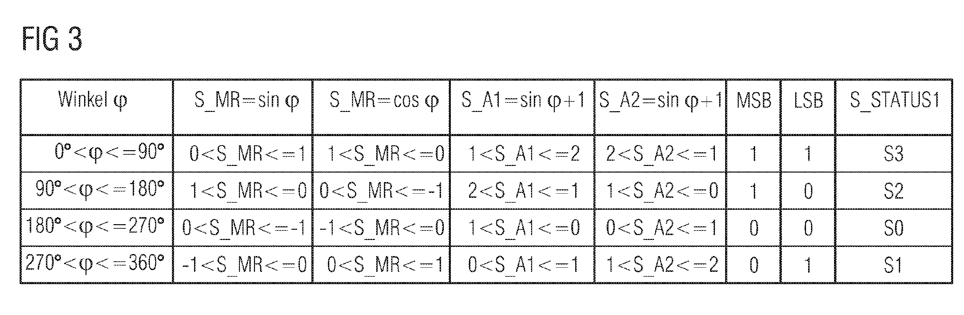

Anhand der in Figur 3 dargestellten Tabelle wird die Funktionsweise der ersten Analogeinheit AFE1 näher erläutert.

Das als Sinus- und Kosinussignal ausgebildete Sensorsignal S_MR in Figur 3 ist beispielsweise als Spannungssignal ausgebildet. Zur vereinfachten Beschreibung wird das Sensorsignal S_MR mit Spannungswerten zwischen -1 V und 1 V vorgegeben. Ist beispielsweise die Welle W um einen Drehwinkel ϕ zwischen 0° und 90° bezogen auf den vorgegebenen Bezugspunkt verdreht, liegt eingangsseitig am ersten Verstärker A1, korrespondierend zu dem Sinus des Drehwinkels ϕ, ein Wert des Sensorsignals S_MR zwischen 0 V und 1 V an. Am zweiten Verstärker A2 liegt eingangsseitig, korrespondierend zu dem Kosinus des Drehwinkels ϕ, ein Wert des Sensorsignals S_MR zwischen 1 V und 0 V an.

Der erste und zweite Verstärker A1 und A2 sind derart ausgebildet, dass das eingangsseitig anliegende Sensorsignal S_MR mit einer Offsetspannung von 1 V beaufschlagt wird. Somit wird ausgangsseitig dem ersten Verstärkersignal S_AMP1 ein Spannungswert zwischen 1 V und 2 V zugeordnet, während dem zweite Verstärkersignal S_AMP2 ein Spannungswert zwischen 2 V und 1 V mittels des zweiten Verstärkers A2 zugeordnet wird, wenn ein Drehwinkel ϕ zwischen 0° und 90° vorgegeben wird.

Das erste und zweite Referenzsignal VREF1 und VREF2 ist mit einem Spannungswert von 1 V vorgegeben. Der erste Komparator COMP1 ist typischerweise derart ausgebildet, dass Werte des ersten Verstärkersignals S_AMP1, die größer oder gleich dem Spannungswert des ersten Referenzsignals VREF1 sind, ausgangsseitig mit einer logischen 1 vorgegeben werden, die mittels des ersten Schaltelements DFF1 als MSB-Signal des ersten Zustandssignals S_STATE1 übernommen wird. Spannungswerte kleiner als das erste Referenzsignal VREF1 werden mit einer logischen 0 als MSB-Signal vorgegeben.

Der zweite Komparator COMP2 ist analog zum ersten Komparator COMP1 ausgebildet. Ausgangswerte des zweiten Komparators COMP2 werden mittels des zweiten Schaltelements DFF2 als LSB-Signal für das erste Zustandssignal S_STATE1 übernommen.

Für das MSB- und das LSB-Signal wird zur Vereinfachung angenommen, dass ein Spannungswert von 0 V einer logische 0 und ein Spannungswert von 1 V einer logische 1 entspricht.

Für einen Drehwinkel ϕ der Welle W zwischen 0° und 90° ergibt sich bezogen auf einen vorgegebenen Bezugspunkt als MSB-Signal eine logische 1 und als LSB-Signal ebenfalls eine logische 1. Mittels des ersten Zustandssignals S_STATE1 wird somit ein Binärkode von 0b11 übermittelt, dem ein vierter Zustand S3 zugeordnet werden kann.

Analog zu der Betrachtung des Drehwinkels ϕ der Welle W zwischen 0° und 90°, ergibt sich für einen Drehwinkel ϕ zwischen 90° und 180° eine logische 1 als MSB-Signal und eine logische 0 als LSB-Signal, die einem dritten Zustand S2 zugeordnet werden. Für einen Drehwinkel ϕ zwischen 180° und 270° ergibt sich eine logische 0 als MSB-Signal und eine logische 0 als LSB-Signal, die einem ersten Zustand S0 zugeordnet werden. Für einen Drehwinkel ϕ zwischen 270° und 0° / 360° ergibt sich eine logische 0 als MSB-Signal und eine logische 1 als LSB-Signal, die einem zweiten Zustand S1 zugeordnet werden.

Dreht sich die Welle W in eine vorgegebene erste Drehrichtung mit aufsteigenden Drehwinkelwerten, d .h. beginnend von dem Drehwinkel ϕ gleich 0° bis 360°, werden die Zustände S3 S2 S0 S1 nacheinander durchlaufen. In einer zweiten, entgegengesetzten Drehrichtung der Welle werden die Zustände S1 S0 S2 S3 nacheinander durchlaufen.

Neben den zur vereinfachten Beschreibung vorgegebenen Spannungswerten sind andere Ausbildungen des Sensorsignals S_MR und der Signale innerhalb der entsprechenden Analogeinheit typisch. Bei typischen Ausbildungen der Erfassungseinheit ASIC liegen Spannungswerte im Bereich bis 3,3 V oder 5 V vor.

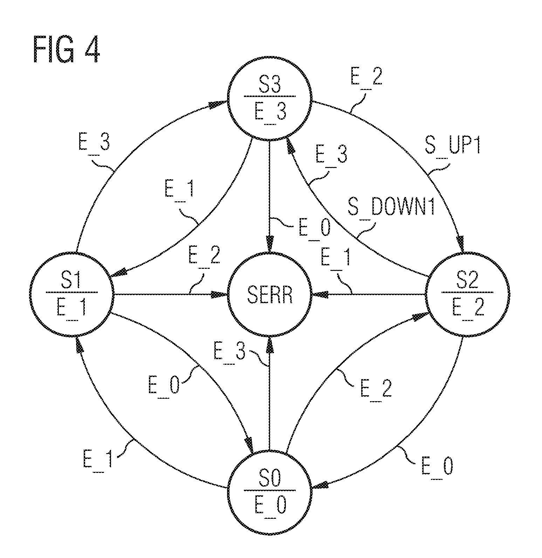

Figur 4 stellt ein Zustandsdiagramm dar mit den Zustandsübergängen des ersten Zustandsautomaten SM1. Der erste Zustandsautomat SM1 ist ein endlicher Zustandsautomat mit fünf erlaubten Zuständen. Die jeweiligen Zustände des ersten Zustandsautomaten SM1 sind durch die Kreise dargestellt und entsprechen den Zuständen, die mittels des ersten Zustandssignals S_STATE1 dem ersten Zustandsautomaten SM1 übermittelt werden. Dargestellt sind der erste, zweite, dritte und vierte Zustand S0, S1, S2 und S3 und ein Fehlerzustand SERR. Die unterhalb der Kreistrennlinie bezeichneten Bezugszeichen E_0 bis E_3 3 stellen die jeweiligen Eingangsereignisse zum Einnehmen des jeweiligen Zustandes dar. Zum Beispiel wird der vierte Zustand S3 anfangs eingenommen, wenn zuvor das Ereignis E_0 eintritt.

Gibt beispielsweise das Sensorsignal S_MR einen Drehwinkel ϕ zwischen 0° und 90° vor, wird mittels der ersten Analogeinheit AFE1 ein viertes Ereignis E_3 vorgegeben, das dem vierten Zustand S3 zugeordnet ist. Dreht sich die Welle weiter in die vorgegebene erste Drehrichtung, d. h. der Drehwinkel nimmt einen Winkel ϕ zwischen 90° und 180° ein, tritt ein drittes Ereignis E_2 ein, das zu einem Zustandsübergang zu dem dritten Zustand S2 führt. Dreht sich die Welle weiter in die erste Drehrichtung, nimmt der erste Zustandsautomat SM1 den ersten Zustände S0 und nachfolgend den zweiten Zustand S1 ein. Somit werden für eine volle Umdrehung der Welle W in die erste Drehrichtung nacheinander die Zustände S3, S2, S0 und S1 eingenommen.

Wird ausgehend von dem vierten Zustand S3 der Drehwinkel ϕ zwischen 270° und 360° vorgegeben, tritt ein zweites Ereignis E_1 auf, das dem zweiten Zustand S1 zugeordnet ist. Dreht sich die Welle W weiter in die zweite Drehrichtung, nimmt der erste Zustandsautomat SM1 nacheinander die Zustände S0, S2 und S3 ein. Somit werden für eine volle Umdrehung der Welle W in die zweite Drehrichtung nacheinander die Zustände S1, S0, S2 und S3 eingenommen.

Tritt dagegen ausgehend von dem vierten Zustand S3 das erstes Ereignis E_0 auf, das dem ersten Zustand S0 zugeordnet ist, würde der zweite Zustand S1 übersprungen werden. Ein Überspringen eines Zustandes ist typischerweise nicht erlaubt, kann aber beispielsweise dann vorkommen, wenn eine Drehwinkeländerung innerhalb einer vorgegebenen Zeitdauer besonders hoch ist. Erfasst der erste Zustandsautomat SM1 ausgehend von dem vierten Zustand S3 als folgenden Zustand das erste Ereignis E_0, nimmt der erste Zustandsautomat SM1 den Fehlerzustand SERR ein und zeigt somit einen fehlerhaften Zustandsübergang an. Dieser Fehlerzustand SERR wird auch dann eingenommen, wenn ausgehend von dem dritten Zustand S2 das erste Ereignis E_1 auftritt, wenn ausgehend von dem ersten Zustand S0 das vierte Ereignis E_3 auftritt oder wenn ausgehend von dem zweiten Zustand S1 das dritte Ereignis E_2 eintritt.

Der Fehlerzustand SERR kann beispielsweise zur Anzeige einer fehlerhaften und/oder nichtvertrauenswürdigen Drehwinkelermittlung verwendet werden. Das Einnehmen des Fehlerzustandes SERR führt typischerweise zum Anzeigen eines Fehlers des jeweiligen Zustandsautomaten SM1 und/oder SM2 mittels des ersten und/oder des zweiten Zustandsfehlersignals S_ERR1 und/oder S_ERR2.

Der erste Zustandsautomat SM1 erzeugt das erste Inkrementsignal S_UP1, so z. B. einen positiven Puls mit vorgegebener Pulsdauer, bei einem Zustandsübergang von dem vierten Zustand S3 in den dritten Zustand S2. Das erste Dekrementsignal S_DOWN1 wird erzeugt, so z. B. ein positiver Puls mit vorgegebener Pulsdauer, bei einem Zustandsübergang von dem dritten Zustand S2 in den vierten Zustand S3.

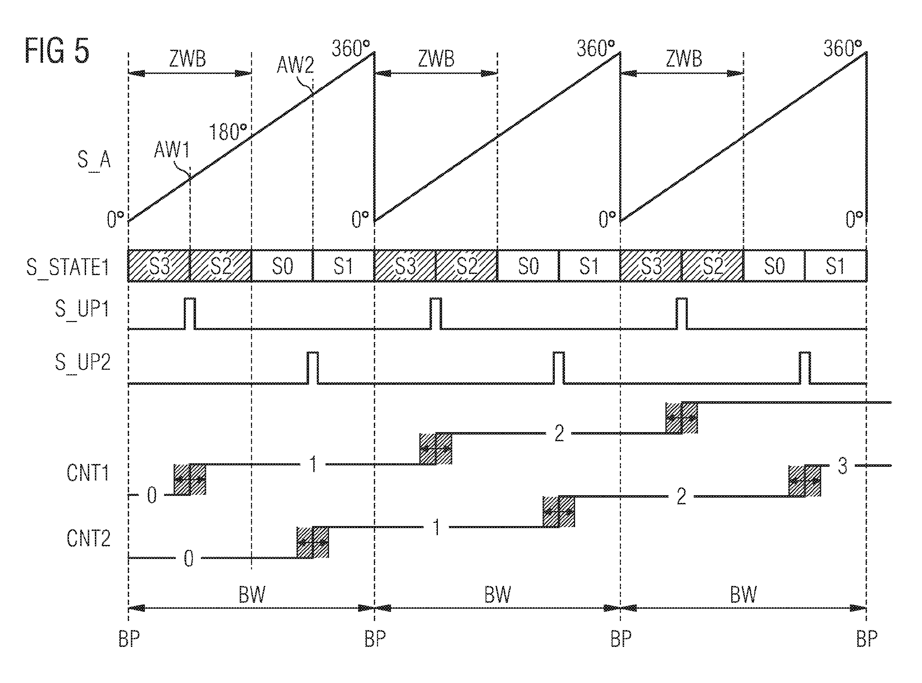

In Figur 5 ist das Drehwinkelsignal S_A dargestellt, das repräsentativ ist für den gerade gültigen Sensorwert des Sensors MR. Das Drehwinkelsignal S_A repräsentiert den Drehwinkel ϕ mit Werten zwischen 0° und 360°, wobei einem Durchlauf von 0° bis 360° einer vollen Umdrehung der Welle W zugeordnet ist. Dem Drehwinkel von 0° ist der Bezugspunkt BP zugeordnet und bezogen auf diesen Bezugspunkt BP ist einem Bezugswinkel BW der Drehwinkel von 360° zugeordnet. Der durch das Drehwinkelsignal S_A repräsentierte absolute Winkel ist typischerweise besonders einfach durch eine Tangensbildung aus dem Sinus- und Kosinussignal des Sensorsignals S_MR ermittelbar. In Figur 5 sind somit drei volle Umdrehungen der Welle W dargestellt. Des Weiteren sind drei volle Zustandsdurchläufe des ersten Zustandssignals S_STATE1 dargestellt.

Die Welle W dreht sich in die erste Drehrichtung mit aufsteigenden Winkelwerten, d. h. beginnend von dem Drehwinkel ϕ gleich 0° bis 360°, werden nacheinander die Zustände S3 S2 S0 S1 durchlaufen. In einer entgegengesetzten zweiten Drehrichtung der Welle W werden die Zustände S1 S0 S2 S3 nacheinander durchlaufen.

Da typischerweise die zweite Analogeinheit AFE2 analog zur ersten Analogeinheit AFE1 ausgebildet ist, erzeugt diese idealerweise bei gleicher Drehrichtung identische Zustände und Zustandsübergänge.

Ferner sind das erste und das zweite Inkrementsignal S_UP1 und S_UP2 dargestellt. Abhängig von einem vorgegebenen Wechsel des ersten und zweiten Zustandssignals S_STATE1 und S_STATE2 wird mittels des ersten und zweiten Zustandsautomaten SM1 und SM2 in Figur 1 der positive Puls des ersten und zweiten Inkrementsignals S_UP1 und S_UP2 erzeugt.

Dreht die Welle W in die erste Drehrichtung, erzeugt der erste Zustandsautomat SM1 den positiven Puls des ersten Inkrementsignals S_UP1 bei einem Zustandsübergang von dem vierten S3 in den dritten Zustand S2. Unter der Annahme, dass die Dauer jedes der vier Zustände identisch ist, entspricht dieser Zustandsübergang einem Winkel von 90° bezogen auf den Bezugswinkel BW. Der Winkel, der dem Zustandsübergang von dem vierten S3 in den dritten Zustand S2 zugeordnet ist, wird im Folgenden als erster Ablaufwinkel AW1 bezeichnet ist. Dreht die Welle W dagegen in die zweite, entgegengesetzte Drehrichtung, wird bei einem Zustandsübergang von dem dritten S2 in den vierten Zustand S3 das erste Dekrementsignal S_DOWN1 erzeugt (nicht dargestellt).

Dreht die Welle W in die erste Drehrichtung, erzeugt der zweite Zustandsautomat SM2 den positiven Puls des zweiten Inkrementsignals S_UP2 bei einem Zustandsübergang von dem ersten S0 in den zweiten Zustand S1. Dieser Zustandsübergang entspricht einem Winkel von 270° bezogen auf den Bezugswinkel BW. Der Winkel, der dem Zustandsübergang von dem ersten S0 in den zweiten Zustand S1 zugeordnet ist, wird im Folgenden als zweiter Ablaufwinkel AW2 bezeichnet. Dreht die Welle W dagegen in die zweite, entgegengesetzte Drehrichtung, wird bei einem Zustandsübergang von dem zweiten S1 in den ersten Zustand S0 das zweite Dekrementsignal S_DOWN2 erzeugt (nicht dargestellt).

Da der erste und zweite Ablaufwinkel AW1 und AW2 verschieden sind, werden die jeweiligen Inkrementsignale S_UP1 und S_UP2 und die jeweiligen Dekrementsignale S_DOWN1 und S_DOWN2 winkelversetzt zueinander erzeugt.

Neben der Erzeugung der Inkrementsignale S_UP1 und S_UP2 und der Dekrementsignale S_DOWN1 und S_DOWN2 bei vorgegebenen Zustandsübergängen, ist auch ein vorgegebener Zustand zur Erzeugung des entsprechenden positiven Pulses denkbar.

Abhängig von dem ersten und zweiten Inkrementsignal S_UP1 und S_UP2 und dem ersten und zweiten Dekrementsignal S_DOWN1 und S_DOWN2 werden auch der erste und der zweite Zähler CNT1 und CNT2 winkelversetzt zueinander entweder inkrementiert oder dekrementiert.

Mittels der Entscheidungseinheit DU im Signalprozessor SP der Auswerteeinheit ASIC in Figur 1 wird ein Zählerstand der beiden Zähler CNT1 und CNT2 abhängig von dem Drehwinkelsignal S_A ausgewählt. Wie in Figur 5 als schraffierte Flächen beim ersten und zweiten Zähler CNT1 und CNT2 dargestellt, ist ein Inkrementierzeitpunkt und somit auch ein Dekrementierzeitpunkt nicht eindeutig vorgegeben, sondern kann durch Ungenauigkeiten, die beispielsweise Bauelementtoleranzen und Rauschanteilen im Sensorsignal S_MR zugeordnet werden können, zeitlich verschoben sein. Ein Auslesen des jeweiligen Zählerstandes in diesen Bereichen wird deshalb vermieden. Gibt das Drehwinkelsignal S_A beispielsweise den Drehwinkel ϕ zwischen 0° und 180° vor, wählt die Entscheidungseinheit DU den Zählerstand des zweiten Zählers CNT2. Diesem Drehwinkelbereich von 0° bis 180° ist ein Zuordnungswinkelbereich ZWB zugeordnet, der beispielsweise symmetrisch um den ersten Ablaufwinkel AW1 angeordnet ist. Innerhalb des Zuordnungswinkelbereichs ZWB erfolgt keine Änderung des Zählerstandes des zweiten Zählers CNT2, weil der zum Inkrementieren oder Dekrementieren des zweiten Zählers erforderliche Durchlauf des zweiten Ablaufwinkels AW2, der bei einem Drehwinkel von 270° angeordnet ist, noch nicht erfolgt ist. Gibt das Drehwinkelsignal S_A den Drehwinkel ϕ zwischen 180° und 360° vor und somit einen Drehwinkelbereich außerhalb des Zuordnungswinkelbereichs ZWB, wird mittels der Entscheidungseinheit DU der Zählerstand des ersten Zählers CNT1 ausgewählt und übermittelt. Außerhalb des Zuordnungswinkelbereichs ZWB erfolgt keine Änderung des Zählerstandes des ersten Zählers CNT1, weil der zum Inkrementieren oder Dekrementieren des ersten Zählers CNT1 erforderliche Durchlauf des ersten Ablaufwinkels AW1 bereits bei 90° erfolgt ist und somit innerhalb des Zuordnungswinkelbereichs ZWB. Grundsätzlich sind auch andere Zuordnungswinkelbereiche ZWB denkbar, wobei zu beachten ist, dass der jeweilige Zuordnungswinkelbereich ZWB nicht den zweiten Ablaufwinkel AW2 umfassen sollte. Vielmehr umfasst der Zuordnungswinkelbereich ZWB einen Bereich um den ersten Ablaufwinkel AW1 innerhalb dessen der erste Zähler CNT1 unter Berücksichtigung von Störeinflüssen sicher inkrementiert oder dekrementiert wird.

Der Zählerstand des ersten Zählers CNT1 unterscheidet sich von der tatsächlichen Anzahl der vollen Umdrehungen der Welle W derart, dass er immer um eins größer ist. Deshalb muss vor der Verwendung des Zählerstandes des ersten Zählers CNT1 dieser um einen Wert eins dekrementiert werden.

Mittels der Fehlererkennungseinheit ERRD im Signalprozessor SP wird nach dem Einschalten der Zündung des Kraftfahrzeugs der Zählerstand der beiden Zähler CNT1 und CNT2 miteinander verglichen. Da eine Differenz der Zählerstände der beiden Zähler CNT1 und CNT2 bei einem fehlerfreien Betrieb nicht größer sein darf als eins, wird mittels der Fehlererkennungseinheit ERRD bei einer größeren Differenz ein Fehlerstatus mittels des Fehlerstatussignals S_ERR angezeigt.

Die Aufgabe der Entscheidungseinheit DU und der Fehlererkennungseinheit ERRD können auch als Programm im Signalprozessor SP implementiert sein und mittels diesem abgearbeitet werden.

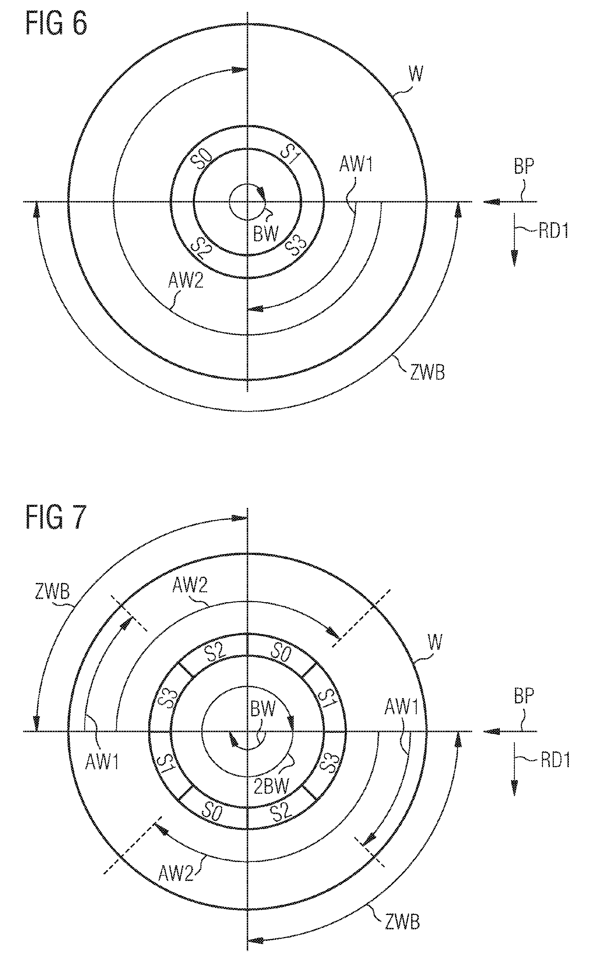

Eine Darstellung des ersten und des zweiten Ablaufwinkels AW1 und AW2 ist in Figur 6 mit der Welle W und dem Bezugspunkt BP dargestellt. Bezogen auf den Bezugswinkel BW, der bezogen auf den Bezugspunkt BP ist, wird der erste Ablaufwinkel AW1 und der zweite Ablaufwinkel AW2 dargestellt. Des Weiteren sind die vier Zustände der Zustandssignale S_STATE1 und S_STATE2 gezeigt, die jeweils eine Viertelumdrehung der Welle W abdecken. Der Bezugswinkel BW ist als 360° Winkel vorgegeben. Der erste Ablaufwinkel ist als 90° Winkel und der zweite Ablaufwinkel ist als 270° Winkel ausgebildet. Somit wird, unter der Annahme, dass die Dauer jedes der vier Zustände des jeweiligen Zustandssignals S_STATE1 und S_STATE2 identisch ist, dem ersten Ablaufwinkel AW1 der Zustandsübergangs vom vierten Zustand S3 in den dritten Zustand S2 zugeordnet in der ersten Drehrichtung RD1. Dem zweiten Ablaufwinkel AW2 wird der Zustandsübergang vom ersten S0 in den zweiten Zustand S1 zugeordnet in der ersten Drehrichtung RD1.

Dreht sich die Welle W ausgehend vom Bezugspunkt BP in die erste Drehrichtung RD1 wird zunächst der erste Ablaufwinkel AW1 und somit der Zustandsübergang vom vierten S3 in den dritten Zustand S2 durchlaufen, so dass das erste Inkrementsignal S_UP1 erzeugt und der erste Zähler CNT1 inkrementiert wird. Dreht sich die Welle W weiter, wird auch der zweite Ablaufwinkel AW2 und somit der Zustandsübergang von dem ersten S0 in den zweiten Zustand S1 durchlaufen, so dass das zweite Inkrementsignal S_UP2 erzeugt und der zweite Zähler inkrementiert wird. In der zweiten, entgegengesetzten Drehrichtung der Welle W werden die jeweiligen Dekrementsignale S_DOWN1 und S_DOWN2 erzeugt und somit die jeweiligen Zähler CNT1 und CNT2 dekrementiert. Die jeweiligen Zähler zählen volle Umdrehungen der Welle W, weil der Bezugswinkel BW als 360° Winkel ausgebildet ist und der jeweilige Ablaufwinkel AW1 und AW2 nur einmal innerhalb einer vollen Umdrehung der Welle W durchlaufen werden.

In Figur 6 ist des Weiteren der Zuordnungswinkelbereich ZWB dargestellt. Dieser ist als ein 180° Winkelbereich vorgegeben, kann grundsätzlich aber auch andere Winkelbereiche umfassen. Liegt der Drehwinkel der Welle W innerhalb des Zuordnungswinkelbereiches ZWB, kann der Zählerstand des zweiten Zählers CNT2 sicher ausgelesen werden, weil innerhalb des Zuordnungswinkelbereich ZWB keine Änderung des Zählerstandes des zweiten Zählers CNT2 zu erwarten ist. Liegt dagegen der Drehwinkel der Welle W außerhalb des Zuordnungswinkelbereiches ZWB, kann sicher der Zählerstand des ersten Zählers CNT1 sicher ausgelesen werden, weil außerhalb des Zuordnungswinkelbereiches ZWB keine Änderung des Zählerstandes des ersten Zählers CNT1 zu erwarten ist.

Figur 7 zeigt eine weitere Darstellung in der halbe Umdrehungen der Welle W ermittelt werden. Hier ist der Bezugswinkel BW bezogen auf den Bezugspunkt BP als ein 180° Winkel ausgebildet. Eine volle Umdrehung der Welle W um 360° umfasst neben dem Bezugswinkel BW einen zweifachen Bezugswinkel 2BW. Der Bezugswinkel BW kann beispielsweise durch den Sensor MR vorgegeben werden, wobei der Sensor MR nach Ablauf des Bezugswinkels BW das Sensorsignal S MR wiederholt an die jeweilige Analogeinheit AFE1 und AFE2 übermittelt, d. h. einem Durchgang der Sinus- und Kosinusperiode wird eine halbe Umdrehung der Welle W zugeordnet. Dabei ist der Sensor MR beispielsweise derart ausgebildet, dass mittels interner Übersetzungsverhältnisse eine halbe Umdrehung der Welle W zu einer ganze Umdrehung der Sinus- und Kosinuswerte korrespondiert. Der erste Ablaufwinkel AW1 ist in Figur 7 mit einem Winkel von 45° vorgegeben und der zweite Ablaufwinkel AW2 mit einem Winkel von 135° bezogen auf den Bezugswinkel BW oder dem jeweiligen Vielfachen des Bezugswinkels BW. Dem jeweiligen Bezugswinkel BW sind jeweils die vier Zustände S0 bis S3 zugeordnet, die jeweils einen Drehwinkelbereich von 180° abdecken. Wird die Welle W in die erste Drehrichtung RD1 gedreht und erreicht der Drehwinkel der Welle W den jeweiligen ersten Ablaufwinkel AW1, wird das erste Inkrementsignal S_UP1 erzeugt und der erste Zähler CNT1 inkrementiert. Erreicht der Drehwinkel der Welle W den jeweiligen zweiten Ablaufwinkel AW2, wird das zweite Inkrementsignal S_UP2 erzeugt und der zweite Zähler CNT2 inkrementiert. Im Vergleich zur Figur 6, repräsentieren die jeweiligen Zählerstände des ersten und zweiten Zählers CNT1 und CNT2 halbe Umdrehungen der Welle W, weil der Bezugswinkel BW als 180° Winkel ausgebildet ist und somit eine halbe Umdrehung der Welle repräsentiert.

In Figur 7 sind zwei Zuordnungswinkelbereiche ZWB mit jeweils einem Winkelbereich von 90° vorgegeben. Innerhalb des jeweiligen Zuordnungswinkelbereichs ZWB kann der Zählerstand des zweiten Zählers CNT2 sicher ausgelesen werden, während außerhalb des jeweiligen Zuordnungswinkelbereichs ZWB der Zählerstand des ersten Zählers CNT1 sicher ausgelesen werden kann.

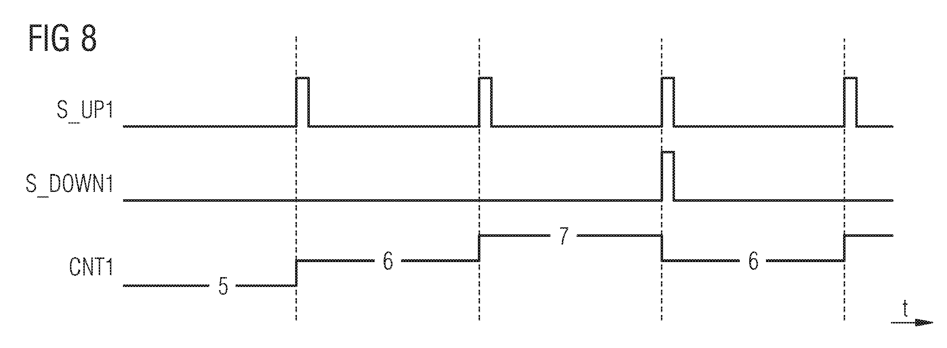

In Figur 8 ist das erste Inkrementsignal S_UP1 und das erste Dekrementsignal S_DOWN1 der ersten Zähleinheit CU1, sowie eine idealisierte Zählerstandsänderung des ersten Zählers CNT1 der ersten Zähleinheit CU1 dargestellt. Ausgehend vom Erfassen voller Umdrehungen der Welle W, wie in Figur 5 und 6 dargestellt, ist der Zählerstand des ersten Zählers CNT1 ist mit einem Wert fünf vorgegeben, d. h. es wurden bereits fünf volle Umdrehungen der Welle W in der ersten Drehrichtung erfasst. Wird nun die Welle W weiter in die erste Drehrichtung gedreht, erfasst die Auswerteeinheit ASIC eine weitere volle Umdrehung der Welle W und inkrementiert den ersten Zähler CNT1 bei einer anliegenden steigenden Flanke des ersten Inkrementsignals S_UP1 auf einen Zählerstand von sechs. Dreht sich die Welle W weiter in die erste Drehrichtung, wird der erste Zähler CNT1 bei einer weiteren ansteigenden Flanke des ersten Inkrementsignals S_UP1 auf einen Zählerstand von sieben inkrementiert. Wird im Folgenden die Drehrichtung der Welle in die zweite, entgegengesetzte Drehrichtung verändert, wird das erste Dekrementsignal S_DOWN1 erzeugt und der erste Zähler CNT1 um eins auf einen Wert von sechs dekrementiert. Die zweite Zähleinheit CU2 ermittelt die Umdrehungen der Welle W analog zur ersten Zähleinheit CU1, außer, dass das zweite Inkrementsignal S_UP2 und das zweite Dekrementsignal S_DOWN2 winkelversetzt sind zu dem ersten Inkrementsignal S_UP1 und ersten Dekrementsignal S_DOWN1.

Soll mittels der Vorrichtung zum Ermitteln von Umdrehungen der Welle W ein absoluter Drehwinkel der Welle ermittelt werden, müssen also sechs volle Umdrehung in der ersten Drehrichtung der Welle W berücksichtigt werden.

In weiteren Ausführungsformen lässt sich die Vorrichtung auch zum Erfassen von Winkelgeschwindigkeiten der Welle verwenden, wobei hier die erfassten Umdrehungen der Welle W über der Zeit erfasst werden.

## Patentansprüche

1. Vorrichtung zum Ermitteln von Umdrehungen einer Welle (W), wobei die Vorrichtung aufweist:
- eine Sensoreinheit (MR), die dazu ausgebildet ist, ein Sensorsignal (S_MR) zu erfassen, das repräsentativ ist für einen Drehwinkel der Welle (W) bezogen auf einen vorgegebenen Bezugspunkt (BP),
- eine erste und eine zweite Zähleinheit (CU1, CU2), die dazu ausgebildet sind, unter Auswertung des Sensorsignals (S_MR) jeweils entweder ein Inkrementsignal (S_UP1) oder ein Dekrementsignal (S_DOWN1) nach einem jeweils vorgegebenen Ablaufwinkel (AW1, AW2), der bezogen ist auf einen vorgegebenen Bezugswinkel (BW) oder auch eines Vielfachen des vorgegebenen Bezugswinkels (BW) bis zu einem maximalen Vielfachen, zu erzeugen, wobei der Bezugswinkel (BW) und auch die Vielfachen des Bezugswinkels (BW) auf den Bezugspunkt (BP) bezogen sind und der Bezugswinkel (BW) und das maximale Vielfache so vorgegeben sind, dass ein Produkt des Wertes des maximalen Vielfachen mit dem Bezugswinkel (BW) gleich 360° ergibt und der Ablaufwinkel (AW1, AW2) der ersten und zweiten Zähleinheit verschieden vorgegeben sind,
- eine Entscheidungseinheit (DU), die dazu ausgebildet ist, die zweite Zähleinheit (CU2) auszuwählen, wenn das Sensorsignal (S_MR) einen Drehwinkel innerhalb eines vorgegebenen Zuordnungswinkelbereichs (ZWB) um den jeweiligen ersten Ablaufwinkel (AW1) repräsentiert, ansonsten die erste Zähleinheit (CU2) auszuwählen, wobei der vorgegebene Zuordnungswinkelbereich (ZWB) außerhalb des jeweiligen zweiten Ablaufwinkels (AW2) liegt.

2. Vorrichtung nach Anspruch 1, bei der die erste und zweite Zähleinheit (CU1, CU2) jeweils eine Analogeinheit (AFE1, AFE2) umfasst, die abhängig vom Sensorsignal (S_MR) ausgangsseitig ein Zustandssignal (S_STATE1, S_STATE2) erzeugt und zwar derart, dass jeweils verschiedenen Drehwinkeländerungen jeweilige vorgegebene Zustände zugeordnet werden, wobei abhängig von dem Zustandssignal entweder das Inkrementsignal (S_UP1, S_UP2) oder das Dekrementsignal (S_DOWN1, S_DOWN2) erzeugt wird.

3. Vorrichtung nach einem der vorstehenden Ansprüche, bei der die erste und zweite Zähleinheit (CU1, CU2) jeweils einen Zustandsautomaten (SM1, SM2) umfasst, der dazu ausgebildet ist, abhängig von dem jeweiligen Zustandssignal (S_STATE1, S_STATE2) und dem von diesem vorgegebenen Zustand jeweils entweder ein Inkrementsignal (S_UP1, S_UP2) oder ein Dekrementsignal (S_DOWN1, S_DOWN2) zu erzeugen.

4. Vorrichtung nach einem der vorstehenden Ansprüche, bei der die erste und zweite Zähleinheit (CU1, CU2) jeweils einen Zähler (CNT1, CNT2) umfasst, der dazu ausgebildet ist, abhängig von dem Inkrementsignal (S_UP1, S_UP2) oder dem Dekrementsignal (S_DOWN1, S_DOWN2) seinen jeweiligen Zählerstand zu inkrementieren bzw. zu dekrementieren.

5. Vorrichtung nach einem der vorstehenden Ansprüche, die dazu ausgebildet ist, abhängig von einer Drehrichtung der Welle (W) den jeweiligen Zähler (CNT1, CNT2) entweder zu inkrementieren oder zu dekrementieren und zwar derart, dass in einer ersten Drehrichtung inkrementiert wird und in einer zweiten, entgegengesetzten Drehrichtung dekrementiert wird.

## Claims

1. Device for determining revolutions of a shaft (W), the device comprising:
- a sensor unit (MR) which is designed to acquire a sensor signal (S_MR) which is representative of an angle of rotation of the shaft (W) referred to a prescribed reference point (BP),
- a first and a second counting unit (CU1, CU2) which are designed to evaluate the sensor signal (S_MR) to respectively generate either an increment signal (S_UP1) or a decrement signal (S_DOWN1) in accordance with a respectively prescribed trailing angle (AW1, AW2), which is referred to a prescribed reference angle (BW), or else to generate a multiple of the prescribed reference angle (BW) up to a maximum multiple, the reference angle (BW) as well as the multiple of the reference angle (BW) being referred to the reference point (BP), and the reference angle (BW) and the maximum multiple being prescribed so as to produce a product of the value of the maximum multiple with the reference angle (BW) equal to 360°, and the first and second counting units are provided with different trailing angles (AW1, AW2),
- a decision unit (DU) which is designed to select the second counting unit (CU2) when the sensor signal (S_MR) represents an angle of rotation within a prescribed assignment angular range (ZWB) around the respective first trailing angle (AW1), and otherwise to select the first counting unit (CU1), the prescribed assignment angular range (ZWB) lying outside the respective second trailing angle (AW2).

2. Device according to Claim 1, in which the first and second counting units (CU1, CU2) respectively comprise an analogue unit (AFE1, AFE2) which generates on the output side a state signal (S_STATE1, S_STATE2) as a function of the sensor signal (S_MR), specifically in such a way that respective prescribed states are respectively assigned to different changes in angle of rotation, either the increment signal (S_UP1, S_UP2) or the decrement signal (S_DOWN1, S_DOWN2) being generated as a function of the state signal.

3. Device according to one of the preceding claims, in which the first and second counting units (CU1, CU2) respectively comprise an automatic state machine (SM1, SM2) which is designed to generate either an increment signal (S_UP1, S_UP2) or a decrement signal (S_DOWN1, S_DOWN2) as a function of the respective state signal (S_STATE1, S_STATE2) and of the state prescribed by the latter.

4. Device according to one of the preceding claims, in which the first and second counting units (CU1, CU2) respectively comprise a counter (CNT1, CNT2) which is designed to increment or to decrement its respective counter reading as a function of the increment signal (S_UP1, S_UP2) or the decrement signal (S_DOWN1, S_DOWN2).

5. Device according to one of the preceding claims which is designed either to increment or to decrement the respective counter (CNT1, CNT2) as a function of a direction of rotation of the shaft (W), specifically in such a way as to increment in a first direction of rotation and to decrement in a second, opposing direction of rotation.

## Revendications

1. Dispositif pour déterminer les tours d'un arbre (W), le dispositif présentant :
- une unité de détection (MR) qui est configurée pour capter un signal de détecteur (S_MR) qui est représentatif d'un angle de rotation de l'arbre (W) par rapport à un point de référence (BP) prédéfini,
- une première et une deuxième unité de comptage (CU1, CU2) qui sont configurées pour, en interprétant le signal de détecteur (S_MR), générer à chaque fois soit un signal incrémental (S_UP1), soit un signal décrémental (S_DOWN1) après un angle de défilement (AW1, AW2) à chaque fois prédéfini, lequel est en rapport avec un angle de référence (BW) prédéfini ou aussi pour générer un multiple de l'angle de référence (BW) prédéfini jusqu'à un multiple maximal, l'angle de référence (BW) ainsi que les multiples de l'angle de référence (BW) se rapportant au point de référence (BP) et l'angle de référence (BW) ainsi que le multiple maximal étant prédéfinis de telle sorte qu'un produit de la valeur du multiple maximal par l'angle de référence (BW) est égal à 360° et l'angle de défilement (AW1, AW2) de la première et de la deuxième unité de comptage sont prédéfinis à des valeurs différentes,
- une unité de décision (DU) qui est configurée pour sélectionner la deuxième unité de comptage (CU2) lorsque le signal de détecteur (S_MR) représente un angle de rotation à l'intérieur d'une plage d'angles d'affectation (ZWB) prédéfinie autour du premier angle de défilement (AW1) respectif, sinon sélectionner la première unité de comptage (CU1), la plage d'angles d'affectation (ZWB) prédéfinie se trouvant en-dehors du deuxième angle de défilement (AW2) respectif.

2. Dispositif selon la revendication 1, avec lequel les première et deuxième unités de comptage (CU1, CU2) comprennent respectivement une unité analogique (AFE1, AFE2) qui, en fonction du signal de détecteur (S_MR), génère à sa sortie un signal d'état (S_STATE1, S_STATE2), et ce de telle sorte que des états respectivement prédéfinis sont associés à des variations de l'angle de rotation respectivement différentes, soit le signal incrémental (S_UP1, S_UP2), soit le signal décrémental (S_DOWN1, S_DOWN2) étant généré en fonction du signal d'état.

3. Dispositif selon l'une des revendications précédentes, avec lequel les première et deuxième unités de comptage (CU1, CU2) comprennent respectivement un automate d'état (SM1, SM2) qui est configuré pour, en fonction du signal d'état (S_STATE1, S_STATE2) respectif et de l'état prédéfini par celui-ci, générer à chaque fois soit un signal incrémental (S_UP1, S_UP2), soit un signal décrémental (S_DOWN1, S_DOWN2).

4. Dispositif selon l'une des revendications précédentes, avec lequel les première et deuxième unités de comptage (CU1, CU2) comprennent respectivement un compteur (CNT1, CNT2) qui est configuré pour, en fonction du signal incrémental (S_UP1, S_UP2) ou du signal décrémental (S_DOWN1, S_DOWN2), incrémenter ou décrémenter son état de comptage respectif.

5. Dispositif selon l'une des revendications précédentes, lequel est configuré pour, suivant un sens de rotation de l'arbre (W), incrémenter ou décrémenter le compteur (CNT1, CNT2) respectif, et ce de telle sorte que l'incrémentation a lieu dans un premier sens de rotation et la décrémentation a lieu dans un deuxième sens de rotation opposé.
